Europäisches Patentamt

European Patent Office

Office européen des brevets

(19)

(11) Publication number: **0 024 164**
**B1**

(12) **EUROPEAN PATENT SPECIFICATION**

(45) Date of publication of patent specification: **22.06.83**

(21) Application number: **80302694.7**

(22) Date of filing: **06.08.80**

(51) Int. Cl.³: **C 08 L 33/14,**
**C 08 F 220/28,**
**B 29 D 11/02**

(54) **Preparation of non-cross-linked polymers, moulding process therefor and contact lenses produced by the process.**

(30) Priority: **10.08.79 GB 7927904**

(43) Date of publication of application:
**25.02.81 Bulletin 81/8**

(45) Publication of the grant of the patent:
**22.06.83 Bulletin 83/25**

(84) Designated Contracting States:
**AT BE CH DE FR IT LI NL SE**

(56) References cited:
**US - A - 3 758 448**
**US - A - 3 947 401**

(73) Proprietor: **Coopervision U.K. Limited**
**Solent Industrial Estate Hedge End**
**Southampton SO3 2FY (GB)**

(72) Inventor: **Atkinson, Ivor B.**
**32 Mount Road**
**Chessington Surrey (GB)**
Inventor: **Holdstock, Barry C.**
**67 Northway**
**Morden Surrey (GB)**
Inventor: **Knowlton, John L.**
**5 Lexby Road**
**Totton Hampshire (GB)**

(74) Representative: **Woodcraft, David Charles et al,**
**BROOKES & MARTIN High Holborn House**
**52/54 High Holborn**
**London, WC1V 6SE (GB)**

Courier Press, Leamington Spa, England

# Preparation of non-cross-linked polymers moulding process therefor and contact lenses produced by the process

## Field of the Invention

This invention relates to the preparation of non-cross-linked hydrophilic polymers and to a moulding process which is particularly suitable for moulding such polymers into various shapes, but especially for moulding contact lenses.

## Background and Prior Art

Hydrophilic polymers are used widely in the manufacture of so-called soft contact lenses. At the present time soft contact lenses are normally manufactured by preparing the anhydrous cross-linked polymer as a cylindrical button and machining a lens from such a work piece. After the machining and subsequent polishing operations, the lens is swollen by immersion in an aqueous fluid to form the final soft lens. Moulding provides an attractive alternative approach to the manufacture of soft lenses but suffers from several basic problems, which have restricted the use of this technique for soft lens production.

An ideal moulding procedure would involve preparation of an uncross-linked hydrophilic polymer having adequate flow under moderate elevated temperature causing it to flow and fill the mould cavity and secondly form cross-linkages during the moulding step in a reproducible cross-link density so that the resulting moulded lens has adequate and predictable mechanical properties in the hydrated state. Unfortunately the most widely used and satisfactory monomers for forming hydrophilic polymers for soft lens production, namely hydroxy alkyl acrylates and methacrylates, contain small percentages, normally up to about 1% of diacrylates or dimethacrylates as impurities. Normal polymerisation techniques inevitably result in the formation of crosslinked polymers which cannot be moulded satisfactorily, because a polymer which is to be moulded satisfactorily should be capable of flowing in the mould cavity at a temperature above the glass transition temperature of the polymer. Although the commercial grades of monomers can be freed from bifunctional impurities, this is a laborious and expensive process. British patent specification number 1,395,501 describes a process for producing linear thermoplastic copolymers containing hydroxy groups and subsequently moulding such polymers by mixing a cross-linking agent with the copolymer prior to introduction into the mould cavity. No precautions are described, however, for ensuring that cross-linking does not occur during the preparation of the initial linear copolymer. Furthermore in the subsequent moulding of the linear copolymer it is difficult to achieve a reproducible cross-link density by compounding the polymer with a cross-linking agent and forming the cross-linkages after the copolymer has flowed throughout the mould cavity. In the moulding of contact lenses particularly there is a need for the introduction of a low, but precisely controlled, concentration of cross-linkages into the polymer of the moulded article. There are theoretically two basic approaches to the introduction of cross-linkages into a cured polymer during moulding. Firstly one can produce an uncross-linked polymer containing latent reactive groups which on heating react together to form cross-linkages in the polymer structure. Secondly, the polymer can be compounded with a cross-linking agent before introduction into the mould and then heating the mould to cause reaction between the polymer and the cross-linking agent. In the case of the first of the above possible approaches it is very difficult in practice to exert sufficient control over the reactive groups so that they interact at the desired moment in the mould but do not react prematurely. The second of these methods has the disadvantage that it is always a difficult task to mix a cross-linking agent sufficiently homogeneously with the polymer and to ensure that the correct amount of cross-linkages are introduced on heating the composition. The problem is exacerbated by the need for a controlled low concentration of cross-linkages in the preparation of hydrophilic contact lenses.

## Description of the Invention

According to one aspect of the present invention, there is provided a method of moulding cross-linkable polymers which comprises introducing into a mould a substantially non-cross-linked polymer of an ethylenically unsaturated hydroxy ester in the presence of an esterification catalyst and subjecting the polymer to conditions under which the polymer is sufficiently fluid to fill the mould cavity and thereafter undergoes cross-linking.

The moulding method of the present invention is based on the discovery that in the presence of an esterification catalyst non-cross-linked polymers of hydroxy esters will undergo cross-linking and it is believed that this occurs either by etherificiation between hydroxy groups on different polymer chains with elimination of water or transesterification between hydroxy ester moieties. Whaterver the precise mechanism which is involved, the polymer does become insoluble in methanol when heated in the presence of such catalysts and physical property measurements indicate that a controlled low degree of cross-linking has been introduced. The preferred esterification catalysts are those which are freely soluble in the solvent e.g. aromatic hydrocarbons containing sulphonic acid groups. One specific example of a suitable catalyst is toluene sulphonic acid.

Because of the solubility of such catalysts in the solvent it is relatively easy to introduce a small quantity of the catalyst uniformly into the polymer composition. Typically, 0.1% to 0.3% of catalyst is used, based on the weight of the polymer. It will be appreciated that the moulding method of the present invention is applicable to homo- or copolymers of ethylenically unsaturated hydroxy esters generally and is in particular not restricted to the moulding of 2-hydroxy alkyl acrylates or methacrylates. In addition any mechanical moulding process may be used including compression moulding, transfer moulding and injection moulding. Standard, commercially available moulding equipment may be employed, preferably having means for controlling the temperature of the mould at several levels so that the mould can be heated in stages.

The precise moulding procedure employed in the method of the present invention will depend upon the requirements of the end product. In the case of soft contact lenses having a very high water content it is desirable to carry out the moulding at increasing moulding temperatures in two or more stages in order to equalise stresses and limit distortion in the final product. It has also been found that the addition of plasticising substances, such as polyethylene glycols or their ethers will improve the flow of the polymer at the moulding temperature and reduce the incidence of distortion. In a typical two-stage moulding method in accordance with the invention the polymer composition is heated in the mould to a first temperature e.g. about 120°C at which the polymer is sufficiently fluid to flow into all the crevices of the mould cavity but at which significant cross-linking does not occur. The temperature is then increased in a second stage e.g. to 160°C at which cross-linking proceeds readily. Obviously the moulding procedure could alternatively be carried out with more gradual heating stages.

The catalyst is preferably soluble in a common solvent for the polymer, e.g. methanol, and is incorporated in the polymer by dissolving both the polymer and the catalyst in methanol and removing the solvent by evaporation.

A technique has also been developed by the present inventors for preparing essentially non-cross-linked hydrophilic polymers which can then be moulded and cross-linked either during the moulding step or by post heating in the mould. This technique is applicable to the preparation of polymers of ethylenically unsaturated amides as well as hydroxy alkyl esters of acrylic or methacrylic acid. The term 'amide' in this context is intended to include cyclic amides having centres of ethylenic unsaturation such as vinyl pyrrolidone. A typical example of a suitable aliphatic amide is acrylamide.

According to a second aspect of the present invention, therefore, there is provided a process for preparing a substantially non-cross-linked hydrophilic polymer of a monomer comprising an hydroxy alkyl acrylate or methacrylate or of an ethylenically unsaturated amide optionally in the presence of a minor proportion of the corresponding diester or other bifunctional impurity, said process comprising effecting polymerisation of said monomer in a solvent which is a solvent for the monomer but not for the resulting polymer at the polymerisation temperature, the polymerisation being carried out in the presence of a colloid stabiliser so that the polymer precipitated from the solvent as the polymerisation proceeds forms a flocculated or colloidal dispersion of polymer in the solvent.

The most satisfactory type of stabiliser for use in the above process according to the invention is a polymer having at least two kinds of repeating units, one of which has affinity for the solvent and the other has an affinity for the hydrophilic polymer.

With a given stabiliser it has been found that when the reaction is conducted with the stabiliser present in substantially higher concentrations than recommended in the following Examples, the polymer is produced in the form of particles of colloidal dimensions (typically 0.1 to 1 micrometre diameter) giving dispersions which have low viscosities even at very high solids content. This may be desirable in some cases but isolation of such polymers is not practical by filtration without addition of a flocculation agent which might lead to undesirable contamination in a particular application. In the case of contact lens manufacture or other biomedical applications, it is preferred to avoid such additions.

By choosing an appropriately low concentration of a suitable stabilising substance it has been found possible to carry out the reaction so that the dispersion rapidly flocculates to give a mixture which retains sufficient mobility for easy stirring and polymer particles which may be readily isolated by filtration.

One of the preferred polymeric stabilisers may be added to the solvent as a pre-formed polymer or formed *in situ* in the polymerisation mixture by reaction between a polymer or prepolymer containing sites which are susceptible to free radical attack and the monomer, such as an hydroxy alkyl acrylate or methacrylate. At the present time stabilisers formed *in situ* are the most preferred embodiment owing to the ease of preparation of the graft copolymer precursors or pre-polymers. Examples of these polymeric copolymer precursors or pre-polymers are:

1. copolymers of isobutylmethacrylate and alkyl methacrylate, and

2. copolymers of isobutylmethacrylate and dimethylaminoethyl ethylmethacrylate (hereinafter referred to as DMAEMA).

The stabilisers will of course be soluble in the solvent under the reaction conditions. Although it is possible to prepare filterable polymer dispersions in the absence of stabilising substances only very low solids contents may be achieved (typically <10%) before the reaction mixture rapidly becomes solid and hence unprocessable. By contrast in accordance with the present invention it is possible to operate satisfactorily at polymer concentrations as high as 20% or more. This is of course of a considerable advantage in reducing the amount of solvent which has to be handled.

As the HEMA (2-hydroxyethylmethacrylate) or other monomer is contacted with the stabiliser precursor, such as DMAEMA and isobutyl methacrylate in solution in a mutual solvent, such as toluene, the first effect is thought to be for some HEMA to react with the DMAEMA to form the colloid stabiliser. Then as the bulk of the HEMA begins to polymerise, uncross-linked polymer is initially formed as colloid particles which then flocculate automatically (i.e. without addition of flocculating agent) as the concentration of polymer increases. Although the preferred technique, as indicated by the Examples which follow, involves adding the HEMA dropwise to the reaction mixture containing the DMAEMA and isobutyl methacrylate, it is equally possible to add the stabiliser precursor to the HEMA.

Although the invention has been described with particular reference to the preparation of polymers of hydroxy-alkyl acrylates and methacrylates or of ethylenically unsaturated amides, it will be appreciated that other comonomers may be included in the polymerisation mixture. Such comonomers may be hydrophilic or hydrophobic. In the case of copolymers of hydroxy alkyl acrylates or methacrylates the hydroxy acrylates or methacrylates are preferably present in a major proportion by weight. Typical comonomers are alkyl acrylates or methacrylates e.g. methyl or butyl methacrylate, acrylamide, vinyl pyrrolidone, styrene, methacrylic acid or acrylic acid.

After the moulding step has been completed the hydrophilic moulded article, e.g. a contact lens may be swollen in an aqueous medium. In the case where the polymer contains segments resulting from methacrylic or acrylic acid, the article is preferably swollen in a mildly alkaline aqueous solution as described in British Patent Specification No. 1,548,158.

The following non-limiting Examples are given to illustrate the invention and the manner in which it may be carried into effect. Examples 1 to 3 illustrate preparation of uncross-linked hydrophilic polymers and Example 4 illustrates the compounding and moulding of ethylenically unsaturated hydroxy esters.

### Examples
### Polymer Preparation
#### 1. POLY (2-Hydroxyethylmethacrylate)

A copolymer of dimethylaminoethyl methacrylate (DMAEMA) and iso-butylmethacrylate containing 6% DMAEMA by weight (0.1 g) and azobis (isobutyronitrile) (AZDN) (0.1 g) were dissolved in 60 ml of toluene by stirring under nitrogen.

2-Hydroxyethyl methacrylate containing 0.05% glycol dimethacrylate and 0.2% methacrylic acid (1.0 g) was added and the mixture stirred at 75°C until a white precipitate formed (ca 10 min). After a further 5 minutes, 2-hydroxyethyl methacrylate (29 g) toluene (20 ml) and thioglycollic acid (0.1 g), were added dropwise over two hours at 75°C. The mixture was stirred for a further 30 minutes and the white precipitate of polymer filtered off and washed with toluene and dried in vacuo to give an essentially quantitative yield of poly (2-hydroxyethylmethacrylate), molecular weight (viscosity) of 50,000, which was soluble in methanol and dimethyl formamide.

#### 2. COPOLYMER of 2-Hydroxyethylmethacrylate and methacrylic acid

The polymerisation was carried out as described in Example 1, except a blend containing 5.5% by weight of methacrylic acid and 94.5% of 2-hydroxyethylmethacrylate (2-HEMA) was used instead of 2-HEMA alone and the thioglycoll acid was omitted. A 90% yield of a copolymer, soluble in 1:1 alcohol-water and dilute aqueous ammonia, was obtained. Analysis by titration revealed the presence of 5.6% of polymerised methacrylic acid moieties.

#### 3. COPOLYMER of 2-HEMA, styrene and methacrylic acid.

This polymerisation was carried out as described in Example 1 except a blend of 2-HEMA (86% by weight), methacrylic acid (6.6% by weight) and styrene (7.4% by weight) was used instead of 2-HEMA alone. A 90% yield of copolymer containing 4.2% polymerised styrene moieties and 7.0% methacrylic acid moieties was obtained. It was soluble in methanol and dimethyl formamide.

#### 4. Compounding and Moulding

The following mixtures were prepared by dissolving the appropriate quantities of ingredients in methanol and evaporating the solutions to dryness.

i. Poly (2—HEMA) + 0.3% PTSA
ii. Poly (2—HEMA) + 0.3% PTSA + 5% diethylene glycol
iii. Poly (2—HEMA) + 0.3% PTSA + 5% ethylene glycol dimethyl ether.

'PTSA' means p-toluene sulphonic acid

Mixture i was moulded at 160°C and 10.2 MPa 100 kg/sq.cm) for 10 minutes using a test mould with a cavity 25 mm x 25 mm x 0.25 mm. A crystal clear moulding, swollen by, but insoluble in methanol was obtained. When swollen to equilibrium in buffered saline solution (pH 7.4) a grossly distorted hydrogel was obtained.

When mixtures ii and iii were similarly moulded and hydrated in the buffered saline solution the distortion was greatly reduced. If a moulding procedure of 10 minutes at 110°C followed by 10 minutes at 160°C was followed the distortion was eliminated. Repeat mouldings were prepared and their extractable and equilibrium water contents were determined. The results showed the process to be reproduceable and water contents close to that expected for lightly cross-linked bulk polymerised poly (2—HEMA) i.e. 40% water by weight were obtained.

In the foregoing Examples, the un-cross-linked polymer was a polymer of 2—HEMA. However, it will be appreciated that other hydroxy alkyl acrylates or methacrylates could be polymerised by this technique, either alone or with other comonomers. Also the polymerisation process of this invention may be used to prepare polymers of ethylenically unsaturated amides, specific examples being acrylamide and cyclic amides, such as vinyl pyrrolidone.

Also in the above Examples illustrating the novel moulding technique of this invention, a plasticiser is mixed with the other components of the moulding mixture just prior to moulding. We have found that it is also possible to add the plasticiser to the reaction mixture in which the uncross-linked polymer (such as poly (2—HEMA) is formed, the plasticiser thus being incorporated in the precipitated polymer particles.

**Claims**

1. A method of moulding a cross-linkable polymer which comprises introducing into a mould an essentially non-cross-linked polymer of an ethylenically unsaturated hydroxy ester in the presence of an esterification catalyst and subjecting the polymer to conditions under which the polymer is sufficiently fluid to fill the mould cavity and thereafter undergoes cross-linking.

2. A method according to claim 1 wherein the catalyst is dispersed in the polymer prior to introduction into the mould by dissolving the polymer and catalyst in a common solvent and removing the solvent.

3. A method according to claim 1 or claim 2 wherein the esterification catalyst is an aromatic hydrocarbon containing sulphuric acid groups.

4. A method according to claim 3 wherein the catalyst is toluene sulphonic acid.

5. A method according to any one of the preceding claims wherein the polymer is a homopolymer of an hydroxy alkyl acrylate or methacrylate or a copolymer of such an ester with one or more ethylenically unsaturated monomers.

6. A method according to any one of the preceding claims wherein a plasticiser is added to the polymer or to the reaction mixture in which the polymer is formed so as to increase the ability of the polymer to flow during moulding.

7. A method according to claim 6 wherein the plasticiser is a polyethylene glycol or a polyethylene glycol ether.

8. A method according to any one of the preceding claims wherein the polymer is moulded by transfer moulding, compression moulding or injection moulding.

9. A method of moulding soft contact lenses which comprises introducing into a mould an essentially non-cross-linked thermoplastic polymer of an ethylenically unsaturated hydroxy ester having an esterification catalyst uniformly distributed within the polymer and subjecting the polymer to heating in a plurality of stages during moulding, the polymer being heated in a first stage to a temperature at which the polymer flows to fill the mould cavity but does not undergo cross-linking at a substantial rate and the polymer being heated in a subsequent stage to a higher temperature to effect cross-linking of the polymer.

10. A method according to any one of the preceding claims wherein the essentially non-cross-linked hydrophilic polymer is prepared by effecting polymerisation of a monomer mixture, containing an hydroxy alkyl acrylate or methacrylate in a solvent for the monomer mixture but not for the resulting polymer at the polymerisation temperature, the polymerisation being carried out in the presence of a colloid stabiliser so that polymer precipitated from the solvent as polymerisation proceeds forms a flocculated or colloidal dispersion of polymer in the solvent.

11. A method according to claim 9, wherein a low concentration of stabiliser is maintained in the reaction mixture whereby the precipitated polymer forms flocculated particles in the reaction mixture.

12. A method according to claim 9 or 10 wherein the stabiliser is a polymer having at least two kinds of repeating units, one of which has an affinity for the solvent and the other has an affinity for the hydrophilic polymer.

13. A method according to claim 11 wherein the stabiliser is formed *in situ* in the polymerisation mixture by reaction between a polymer or prepolymer containing sites which are susceptible to free radical attack and said monomer.

14. A cross-linked, moulded contact lens which is obtained by swelling a product of the process claimed in claim 8 in an aqueous medium.

15. A process for preparing a substantially non-cross-linked hydrophilic polymer of a monomer comprising an hydroxy alkyl acrylate or methacrylate or of an ethylenically unsaturated amide optionally in the presence of a minor proportion of the corresponding diester or other bifunctional impurity, said process comprising effecting polymerisation of said monomer in a solvent which is a solvent for the monomer but not for the resulting polymer at the polymerisation temperature, the polymerisation being carried out in the presence of a colloid stabiliser so that polymer precipitated from the solvent as polymerisation proceeds forms a flocculated or colloidal dispersion of polymer in the solvent.

**Revendications**

1. Procédé de moulage d'un polymère réticulable, caractérisé en ce qu'il consiste à introduire dans un moule un polymère essentiellement non réticulé d'un hydroxy-ester à insaturation éthylénique en présence d'un catalyseur d'estérification et à soumettre le polymère à des conditions dans lesquelles le polymère est suffisamment fluide pour remplir la cavité du moule et subir ensuite une réticulation.

2. Procédé selon la revendication 1, caractérisé en ce que le catalyseur est dispersé dans le polymère avant l'introduction dans le moule en dissolvant le polymère et le catalyseur dans un solvant usuel et en éliminant le solvant.

3. Procédé selon la revendication 1 ou 2, caractérisé en ce que le catalyseur d'estérification est un hydrocarbure aromatique contenant des groupes acide sulfurique.

4. Procédé selon la revendication 3, caractérisé en ce que le catalyseur est l'acide toluène sulfonique.

5. Procédé selon l'une quelconque des revendications précédentes, caractérisé en ce que le polymère est un homopolymère d'un acrylate ou méthacrylate d'hydroxy alkyle ou un copolymère d'un tel ester avec un ou plusieurs monomères à insaturation éthylénique.

6. Procédé selon l'une quelconque des revendications précédentes, caractérisé en ce qu'u n plastifiant est ajouté au polymère ou au mélange réactionnel dans lequel le polymère est formé de façon à accroître l'aptitude du polymère à l'écoulement au cours du moulage.

7. Procédé selon la revendication 6, caractérisé en ce que le plastifiant est un polyéthylène glycol ou un éther de polyéthylène glycol.

8. Procédé selon l'une quelconque des revendications précédentes, caractérisé en ce que la polymère est moulé par moulage par transfert, par moulage par compression ou par moulage par injection.

9. Procédé de moulage de lentilles de contact souples, caractérisé en ce qu'il consiste à introduire dans un moule un polymère thermoplastique essentiellement non réticulé d'un hydroxy ester à insaturation éthylénique, comportant un catalyseur d'estérification uniformément réparti dans le polymère et à soumettre le polymère à un chauffage au cours d'un ensemble d'étapes lors du moulage, le polymère étant chauffé dans une première étape à une température à laquelle le polymère s'écoule pour remplir la cavité du moule mais ne subit pas de réticulation à un niveau appréciable et le polymère étant chauffé dans une étape ultérieure à une température supérieure pour réaliser la réticulation du polymère.

10. Procédé selon l'une quelconque des revendications précédentes, caractérisé en ce que le polymère hydrophile essentiellement non réticulé est préparé en réalisant une polymérisation d'un mélange de monomères contenant un acrylate ou méthacrylate d'hydroxy alkyle dans un solvant pour le mélange de monomères non pour le polymère résultant à la température de polymérisation, la polymérisation étant mise en oeuvre en présence d'un stabilisant de colloïdes de sorte que le polymère précipité dans le solvant à mesure de l'avancement de la polymérisation forme une dispersion colloïdale ou flocculée de polymère dans le solvant.

11. Procédé selon la revendication 10, caractérisé en ce qu'une faible concentration de stabilisant est maintenue dans le mélange réactionnel afin que le polymère précité forme des particules flocculées dans le mélange de réaction.

12. Procédé selon la revendication 10 ou 11, caractérisé en ce que le stabilisant est un polymère ayant au moins deux types de motifs récurrents, dont l'un à une affinité pour le solvant et l'autre à une affinité pour le polymère hydrophile.

13. Procédé selon la revendication 12, caractérisé en ce que le stabilisant est formé in-situ dans le mélange de polymérisation par réaction entre un polymère ou prépolymère contenant des sites qui sont sensibles à une attaque par des radicaux libres et ledit monomère.

14. Lentilles de contact moulées réticulées, obtenues par gonflement d'un produit tel qu'obtenu à la revendication 9, dans un milieu aqueux.

15. Procédé de préparation d'un polymère hydrophile essentiellement non réticulé d'un monomère comprenant un acrylate ou méthacrylate d'hydroxy alkyle ou d'un amide à insaturation éthylénique, éventuellement en présence d'une proportion mineure du diester correspondant ou d'autres impuretés bifonctionnelles, le procédé consistant à effectuer la polymérisation dudit monomère dans un solvant qui est solvant pour le monomère mais non pour le polymère résultant à la température de polymérisation, la polymérisation étant mise en oeuvre en présence d'un stabilisant de colloïdes de façon que le polymère précipité dans le solvant à mesure de la progression de la polymérisation forme une dispersion colloïdale ou flocculée de polymère dans le solvant.

**Patentansprüche**

1. Ein Verfahren zum Formen eines vernetz-

baren Polymeren, das die Einführung eines im wesentlichen nichtvernetzten Polymeren aus einem ethylenisch ungesättigten Hydroxyester in Gegenwart eines Veresterungskatalysators in eine Form und die Einwirkung solcher Bedingungen auf das Polymere umfaßt, unter denen das Polymere ausreichend fließfähig ist, um die Formhöhlung zu füllen, und danach vernetzt wird.

2. Ein Verfahren nach Anspruch 1, bei dem der Katalysator in dem Polymeren vor der Einführung in die Form dadurch dispergiert wird daß man das Polymere und den Katalysator in einem gemeinsamen Lösungsmittel löst und das Lösungsmittel entfernt.

3. Verfahren nach Anspruch 1 oder Anspruch 2, bei dem der Veresterungskatalysator ein aromatischer Kohlenwasserstoff ist, der Schwefelsäuregruppen enthält.

4. Ein Verfahren nach Anspruch 3, bei dem der Katalysator Toluolsulfonsäure ist.

5. Ein Verfahren nach einem beliebigen der vorangehenden Ansprüche, bei dem das Polymere ein Homopolymeres eines Hydroxyalkyl-acrylats oder -methacrylats oder ein Copolymeres eines derartigen Esters mit einem oder mehreren ethylenisch ungesättigten Monomeren ist.

6. Ein Verfahren nach einem beliebigen der vorangehenden Ansprüche, bei dem dem Polymeren oder der Reaktionsmischung, in der das Polymere geformt wird, ein Weichmacher zugesetzt ist, um die Fähigkeit des Polymeren zum Fließen während des Formens zu steigern.

7. Ein Verfahren nach Anspruch 6, bei dem der Weichmacher ein Polyethylenglycol oder ein Polyethylenglycolether ist.

8. Ein Verfahren nach einem beliebigen der vorangehenden Ansprüche, bei dem das Polymere durch Spritzpressen, Formpressen oder Spritzguß geformt wird.

9. Ein Verfahren zum Formen von weichen Kontaktlinsen, das das Einführen eines im wesentlichen nichtvernetzten thermoplastischen Polymeren aus einem ethylenisch ungesättigten Hydroxyester mit einem Veresterungskatalysator, der in dem Polymeren gleichmäßig verteilt ist, in eine Form und das Erhitzen des Polymeren in einer Vielzahl von Stufen während des Formens umfaßt, wobei das Polymere in einer ersten Stufe auf eine Temperatur erhitzt wird, bei der das Polymere fließt und die Formhöhlung füllt, jedoch noch keiner Vernetzung mit einer wesentlichen Geschwindigkeit unterliegt, und das Polymere in einer nachfolgenden Stufe auf eine höhere Temperatur erhitzt wird, um eine Vernetzung des Polymeren zu bewirken.

10. Ein Verfahren nach einem beliebigen der vorangehenden Ansprüche, bei dem das im wesentlichen nichtvernetzte hydrophile Polymere dadurch hergestellt wird, daß man die Polymerisation einer Monomermischung bewirkt, die ein Hydroxyalkylacrylat oder -methacrylat in einem Lösungsmittel für die Monomermischung, jedoch nicht für das entstehende Polymere bei der Polymerisationstemperatur enthält, wobei die Polymerisation in Gegenwart eines Kolloidstabilisators durchgeführt wird, so daß das im Zuge des Fortschreitens der Polymerisation aus dem Lösungsmittel ausgefällte Polymere eine ausgeflockte oder kolloidale Dispersion des Polymeren in dem Lösungsmittel bildet.

11. Ein Verfahren nach Anspruch 10, bei dem in der Reaktionsmischung eine niedrige Konzentration des Stabilisators aufrechterhalten wird, wodurch das ausgefallene Polymere in der Reaktionsmischung ausgeflockte Teilchen bildet.

12. Verfahren nach Anspruch 10 oder 11, bei dem der Stabilisator ein Polymeres ist, das wenigstens zwei Arten von sich wiederholenden Einheiten enthält, von denen eine eine Affinität für das Lösungsmittel und die andere eine Affinität für das hydrophile Polymere aufweist.

13. Verfahren nach Anspruch 12, bei dem der Stabilisator in der Polymerisationsmischung in situ durch Reaktion zwischen einem Polymeren oder Prepolymeren, das durch freie Radikale angreifbare Abschnitte enthält, und dem genannten Monomeren gebildet wird.

14. Eine vernetzte, geformte Kontaktlinse, die durch Quellung eines Produkts des Verfahrens gemäß Anspruch 9 in einem wässrigen Medium erhalten wurde.

15. Verfahren zur Herstellung eines im wesentlichen nicht-vernetzten hydrophilen Polymeren aus einem Monomeren, das ein Hydroxyalkyl-acrylat oder -methacrylat umfaßt, oder aus einem ethylenisch ungesättigten Amid, gegebenenfalls in Gegenwart eines kleineren Anteils des entsprechenden Diesters oder einer anderen bifunktionellen Verunreinigung, wobei das genannte Verfahren die Bewirkung der Polymerisation des genannten Polymeren in einem Lösungsmittel umfaßt, das ein Lösungsmittel für das Monomere ist, jedoch nicht für das erhaltene Polymere bei der Polymerisationstemperatur, wobei die Polymerisation in Gegenwart eines Kolloidstabilisators durchgeführt wird, so daß das im Zuge des Fortschreitens der Polymerisation aus dem Lösungsmittel ausgefallene Polymere eine ausgeflockte oder kolloidale Dispersion des Polymeren in dem Lösungsmittel bildet.